# EUROPÄISCHE PATENTSCHRIFT

(11) **EP 1 177 996 B1**
(45) Veröffentlichungstag und Bekanntmachung des Hinweises auf die Patenterteilung: **08.09.2004**
(21) Anmeldenummer: 01116977.8
(22) Anmeldetag: 12.07.2001
(51) Int. Cl.: B65G 69/00

(54) **Torabdichtung einer Verladeöffnung**
Dock seal for a loading opening
Etanchement de portail pour un évidement de chargement

(30) Priorität: 05.08.2000 DE 10038355
(43) Veröffentlichungstag der Anmeldung: 06.02.2002
(73) Patentinhaber: Mengel & Kühlborn Gerätebau GmbH, 37284 Waldkappel (DE)
(72) Erfinder: Mengel, Herbert, 37284 Waldkappel (DE)
(74) Vertreter: WALTHER, WALTHER & HINZ Patentanwälte

(56) Entgegenhaltungen:
- WO-A-00/27734
- US-A- 4 636 423
- US-A- 6 016 637

## Beschreibung

Die vorliegende Erfindung betrifft eine Torabdichtung einer Verladeöffnung eines Gebäudes mit je einem rechts und links der Verladeöffnung anbringbaren, elastisch nachgiebigen Tragkörper, wobei an den Tragkörper flexible Seiten- und/oder Oberschürzen anbringbar sind.

Aus der DE 40 30 255 A1 und aus der DE 83 00 412.2 U1 ist eine solche Torabdichtung vorbekannt. Hierbei ist der Tragkörper aus einem Block aus weichem Kunststoffschaum gebildet, der von einem folienartigen, aus Gummi- oder Kunststoff mit Gewebe bestehenden Bezug umschlossen ist. Dabei wird der Bezug derart vorgespannt in entsprechende Beschläge eingesetzt, dass der Block permanent unter Vorspannung steht. Durch das Zusammenwirken des vorgespannten Blockes mit dem Bezug wird eine so ausreichende Tragfähigkeit erreicht, dass die Torabdichtung davon getragen werden kann. Außerdem bleibt der Tragkörper hierdurch elastisch nachgiebig und kann von einem daran anstoßenden LKW verdrängt bzw. verformt werden und gelangt nach wegfahren des LKW's wieder in seine ursprüngliche Form. Allerdings ist sowohl die Herstellung, als auch die Montage derartiger Tragkörper auf Grund der vielen Einzelteile und der komplizierten Anbringung sehr kostenintensiv.

Aus der DE-OS 20 18 988 ist eine Torabdichtung mit starren Seitenwänden bekannt, an denen eine Vielzahl von biegsamen, länglichen, waagerecht ausgerichteten Streifen-Lamellen angeracht ist. Diese Streifen sind aus Gummi hergestellt und besitzen eine Textilgewebeeinlage genauso wie eine Verstärkung durch parallel verlaufende Tragseile. Die Streifen sind zwischen 30 cm und 150 cm lang und zwischen 5 cm und 20 cm breit und haben keinerlei tragende Funktion.

Aus dem DE 299 11 685.9 U1 ist eine Torabdichtung mit einer Abdeckfolie bekannt, wobei die Abdeckfolie auf Grund vorgegebener, dreieckförmiger Aussparungen im Tragkörper derart ausgebildet ist, dass sich nach rechts und links zwei Ablaufrinnen ausbilden. Dabei wird die Abdeckfolie etwa in der Mitte der Torabdichtung so hoch montiert, dass das dort anfallende Regenwasser nach rechts und links ablaufen kann. Auch diese Anordnung ist aufwendig.

Davon ausgehend liegt der vorliegenden Erfindung die Aufgabe zugrunde eine Torabdichtung zu schaffen, die ausreichend stabil ist um die gesamte Torabdichtung zu tragen, die ausreichend steif ist um nach der Verformung wieder in ihre Ursprungslage zurückzukehren und die kostengünstig herstellbar ist.

Als technische Lösung dieser Aufgabe wird erfindungsgemäß vorgeschlagen die eingangs genannte Torabdichtung dadurch weiterzubilden, dass der Tragkörper aus einem mit Fasern verstärktem Gummi und/oder Kunststoff gebildeten Verbundmaterial hergestellt ist, wobei das Verbundmaterial sandwichartig aufgebaut ist und sich mindestens zwei Gewebeschichten mit mindestens einer Gummi- und /oder Kunststoffschicht abwechseln.

Eine nach dieser technischen Lehre ausgebildete Torabdichtung hat den Vorteil, dass das aus faserverstärktem Kunststoff und/oder Gummi gebildete Verbundmaterial in großen Mengen, also kostengünstig, hergestellt wird und lediglich auf die gewünschten Maße abgelängt werden braucht, um als Tragkörper für eine solche Torabdichtung verwendet zu werden. Nach ersten Versuchen hat sich herausgestellt, dass ein solches mindestens zwei Gewebeschichten aufweisendes Verbundmaterial auch das daran angehängte Gewicht der gesamten Torabdichtung trägt, ohne Schaden zu nehmen. Des Weiteren ist das durch den Kunststoff oder Gummi geprägte Verbundmaterial derart elastisch, dass es falsch heranfahrenden LKW's seitlich ausweichen bzw. nachgeben kann, und dass es sich anschließend wieder in seine ursprüngliche Form zurückbildet.

Besonders kostengünstig ist auch ein handelsübliches Verbundmaterial, welches sandwichartig aufgebaut ist, wobei in der Mitte eine Gummischicht vorgesehen ist, welche rechts und links von zwei Gewebeschichten umgeben ist, insbesondere wenn die Gewebeschichten wiederum jeweils an eine Gummischicht anschliessen. Ein derartiges 5-schichtiges Verbundmaterial mit zwei Gewebe- und drei Gummischichten ist sehr tragfähig, dennoch biegsam, leicht zu bearbeiten und kostengünstig. Es versteht sich, dass auch dickeres Verbundmaterial eingesetzt werden kann. Die Dimensionierung und die Anzahl der einzelnen Schichten ist abhängig von dem an den Tragkörper anzuhängenden Gewicht und der geforderten Steifigkeit. In jedem Fall lässt sich durch dieses Verbundmaterial ein sehr kostengünstiger Tragkörper für eine Torabdichtung herstellen, der elastisch, formstabil, tragfähig und wetterbeständig ist.

Verstärkt werden diese Vorteile beispielsweise dadurch, dass ein Verbundmaterial mit aus Fasern gewebten oder gewirkten Gewebeschichten verwendet wird. Es hat sich als kostengüntig und zweckmäßig erwiesen, Fasern aus Polyamid, Polyester, Glas, zu verwenden, die mit Aramidfasern verstärkt sein können. Alternativ kann die Gewebeschicht auch aus Stahlcord oder Federstahldraht gebildet sein. Die Verwendung eines Gewebes, welches Schussfäden aus Polyamid und Kettfäden aus Polyester besitzt hat sich als sehr stabil und kostengünstig herausgestellt.

In einer vorteilhaften Weiterbildung ist das Gewebe mit Aramidfasern verstärkt, so dass die Zugfestigkeit der Gewebeschicht weiter erhöht wird, was wiederum zu einer verbesserten Tragfähigkeit des Tragkörpers beiträgt.

In einer anderen, bevorzugten Ausführungsform weist der Tragkörper an seiner oberen Seite eine dreieckförmige Aussparung auf. Dies hat den Vorteil, dass hiermit die über den beiden Tragkörpern angebrachte und lose auf den Tragkörpern aufliegende Abdeckfolie eine Falte bildet, in der sich das Regenwasser sammeln und nach rechts und links abfließen kann. Hierdurch wird in einfacher Weise eine kostengünstige Abdeckfolie geschaffen, bei der auch der Wasserabfluss gewährleistet ist.

Weitere Vorteile der erfindungsgemäßen Torabdichtung ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Frontansicht einer erfindungsgemäßen Torabdichtung;
- Fig. 2: eine Ausschnittsvergrößerung gemäß Linie II in Fig. 1;
- Fig. 3: die Torabdichtung gemäß Fig. 1 mit teilweise geschnitten dargestellter Abdeckfolie.

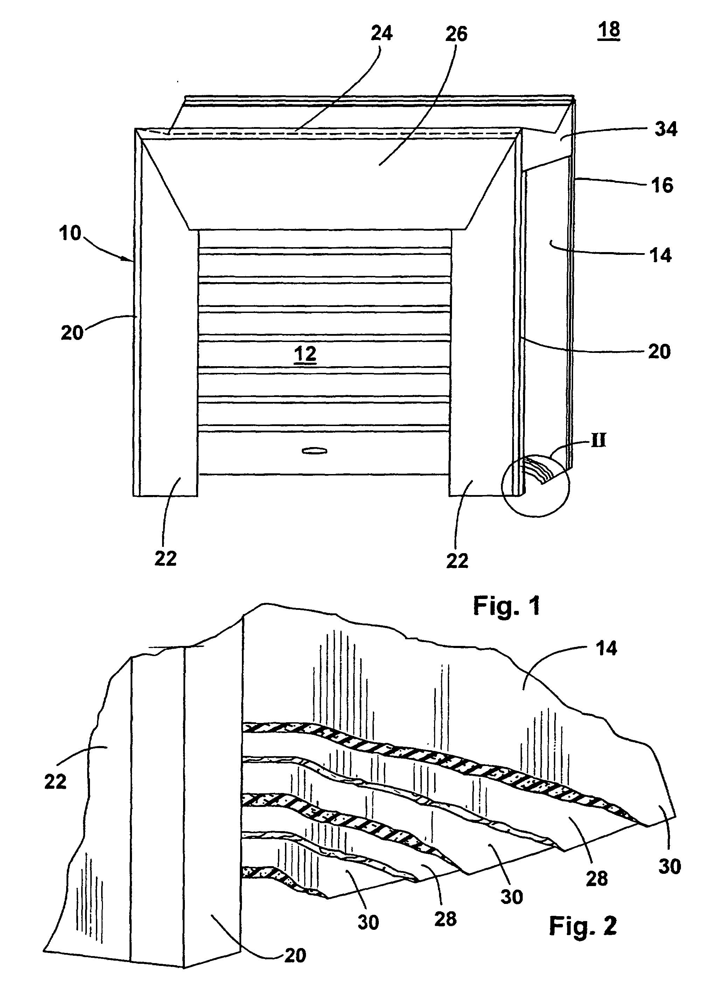

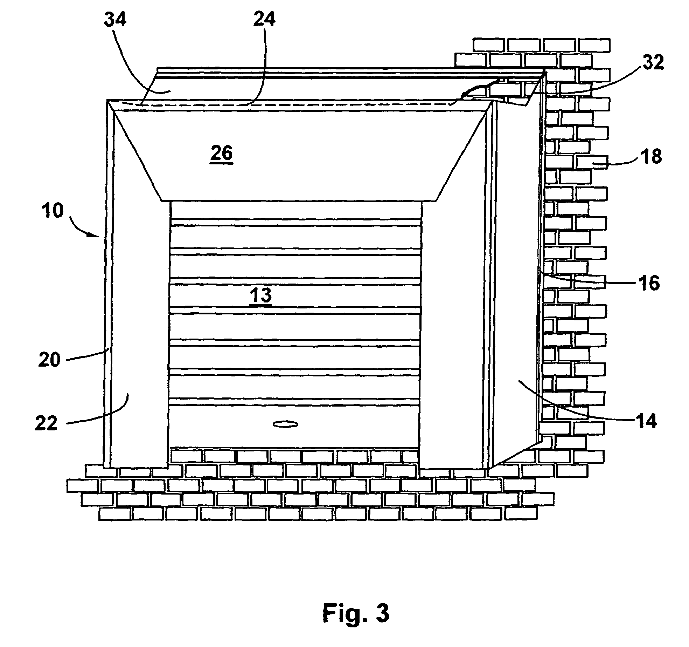

In den Figuren 1 und 2 ist eine erfindungsgemäße Torabdichtung 10 dargestellt, die einer mit einem Sektionaltor 12 verschließbaren Verladeöffnung vorgelagert ist. Diese Torabdichtung 10 umfasst je einen rechten und linken Tragkörper 14, der mit geeigneten Beschlägen 16 am Gebäude 18 befestigt ist. Der senkrecht vom Gebäude 18 abstehende Tragkörper 14 weist an seiner vorstehenden Kante eine durchgehende Profilleiste 20 auf, an der eine flexible Seitenschürze 22 befestigt ist. An den beiden Profilleisten 20 ist kopfseitig eine Querleiste 24 angebracht, die eine Oberschürze 26 trägt. Diese Querleiste 24 ist als Rohr ausgebildet. Die beiden Seiten- 22 und die Oberschürze 24 sind aus einem leichten, folienartigen und flexiblen Material, so dass der an die Verladeöffnung heranfahrende LKW hierdurch gut abgedeckt wird.

Wie Figur 2 zu entnehmen ist, ist der Tragkörper 14 aus einem mehrschichtigen Verbundmaterial hergestellt. Dieses Verbundmaterial besteht aus zwei Gewebeschichten 28 aus einem faserverstärktem Gewebe, welche jeweils von Gummischichten 30 umgeben sind. Dabei ist das Verbundmaterial sandwichartig aufgebaut, so dass sich die Gewebeschicht 28 und die Gumnischicht 30 immer abwechseln. In der hier dargestellten Ausführungsform sind die jeweils äußeren Schichten des Tragkörpers 14 als Gummischicht ausgebildet.

Die Gewebschicht 28 ist aus flexiblen, aber zugfesten Fasern zusammengesetzt. In der vorliegenden Ausführungsform sind die Schussfäden aus Polyamid, während die Kett- oder Lauffäden aus Polyester sind. Es versteht sich, dass die Gewebeschicht auch aus anderen Materialien gebildet werden kann, beispielsweise aus Glasfasern, Stahlcord, Metall, Federstahldrähten oder aus einer Kombination einiger der vorgenannten Materialien. Auch kann die Gewebeschicht durch einbinden von einigen Aramidfasern gezielt verstärkt werden.

Durch die Verbindung der zugfesten Gewebeschicht mit der elastischen und formstabilen Gummischicht wird ein verformbares, formstabiles und dennoch tragfähiges Verbundmaterial erreicht, welches auf Grund seiner serienmäßigen Fertigung kostengünstig zu erhalten ist. Durch die Anbringung der Lasten, insbesondere der Profilleisten und der Seiten- und Oberschürzen an der schmalen Stirnwand des Tragkörpers 14 wird dieser auf Zug belastet, so dass die im Verbundmaterial innewohnende, zugfeste Gewebeschicht die diesbezüglichen angreifenden Kräfte aufnimmt. Im Gegenzug bewirkt die zwar elastische aber dennoch sehr steife Gummischicht, dass der Tragkörper nicht in sich zusammenfällt. Folglich ist ein Tragkörper 14 aus dem Verbundmaterial in der Lage, die Torabdichtung zu halten und dennoch nachgiebig und formstabil zu sein, so dass die Torabdichtung einem falsch anfahrenden LKW nachgeben bzw. seitlich ausweichen kann.

Wie Figur 3 zu entnehmen ist, weisen die Tragkörper 14 an ihrer Oberseite eine dreieckförmige Aussparung 32 auf. Zum Schließen der Oberseite der Torabdichtung 10 wird am Gebäude 18 eine Abdeckfolie 34 angebracht, die auch an der Querleiste 24 befestigt wird. Im Bereich der Tragkörper 14 wird die Abdeckfolie 34 lediglich lose übergelegt und seitlich befestigt. Diese Abdeckfolie 34 soll das Eindringen von Regenwasser in die Torabdichtung 10 verhindern. Damit das auftretende Regenwasser aber auch ordnungsgemäß ablaufen kann, sind im Tragkörper 14 die Aussparungen 32 vorgesehen, so dass sich die Abdeckfolie 34 rinnenförmig in diese Aussparungen 32 legt und somit das Regenwasser kontrolliert nach rechts und links abführen kann.

In einer nicht dargestellten Ausführungsform weist das Verbundmaterial des Tragkörpers lediglich eine Gewebe- und zwei Gummischichten auf. Andererseits sind auch mehrschichtig aufgebaute Verbundmaterialien denkbbar.

In noch einer anderen, nicht dargestellten Ausführungsform setzt sich das Verbundmaterial aus einer Gewebeschicht und entsprechenden Kunststoffschichten zusammen. Auch ein Kunststoff, zum Beispiel PVC, ist elastisch nachgiebig und steif genug, um die hier notwendigen Erfordernisse zu erfüllen. Eine Kombination von Gummi und Kunststoff wäre auch denkbar.

In noch einer anderen, bevorzugten Ausführungsform ist das glasfaserverstärkte Gewebe mit Aramidfasern verstärkt, so dass noch größere Zugkräfte aufgenommen werden können.

## Patentansprüche

1. Torabdichtung einer Verladeöffnung eines Gebäudes mit je einem rechts und links der Verladeöffnung anbringbaren, elastisch nachgiebigen Tragkörper (14), wobei an den Tragkörper (14) flexible Seiten- (22) und/oder Oberschürzen (26) anbringbar sind,
**dadurch gekennzeichnet,**
**dass** der Tragkörper (14) aus einem mit Fasern verstärktem Gummi und/oder Kunststoff gebildeten Verbundmaterial hergestellt ist, wobei das Verbundmaterial sandwichartig aufgebaut ist und sich mindestens zwei Gewebeschichten (28) mit mindestens einer Gummi- (30) und/oder Kunststoffschicht abwechseln.

2. Torabdichtung nach Anspruch 1,
**dadurch gekennzeichnet,**
**dass** die Faser aus Glas, Polyamid, Polyester, Metall oder Stahl gebildet ist.

3. Torabdichtung nach einem der vorangehenden Ansprüche,
**dadurch gekennzeichnet,**
**dass** das Verbundmaterial aus mindestens einer aus Fasern gewebten oder gewirkten Gewebeschicht (28) und mindestens einer an der Gewebeschicht (28) angebrachten oder mit der Gewebeschicht (28) verbundenen Gummi- (30) und/oder Kunststoffschicht gebildet ist.

4. Torabdichtung nach Anspruch 3,
**dadurch gekennzeichnet,**
**dass** die beiden äußeren Schichten des Verbundmaterials aus demselben Material gebildet sind.

5. Torabdichtung nach einem der Ansprüche 3 oder 4,
**dadurch gekennzeichnet,**
**dass** die Gewebeschicht (28) aus Fasern unterschiedlicher Materialien gebildet ist.

6. Torabdichtung nach Anspruch 5,
**dadurch gekennzeichnet,**
**dass** die Schußfäden der Gewebeschicht (28) aus Polyamid und die Kettfäden der Gewebeschicht (28) aus Polyester sind.

7. Torabdichtung nach einem der Ansprüche 3 bis 6,
**dadurch gekennzeichnet,**
**dass** die Gewebeschicht (28) mit Aramidfasern gezielt verstärkt ist.

8. Torabdichtung nach einem der vorangehenden Ansprüche,
**dadurch gekennzeichnet,**
**dass** auf der Torabdichtung (10) eine Abdeckfolie (34) angeordnet ist, die am Gebäude (18) und/oder an der Oberschürze (26) angebracht ist, während die Abdeckfolie (34) lose über dem Tragkörper (14) liegt, wobei die Tragkörper (14) an ihrer oberen Seite eine dreieckförmige Aussparung (32) zur formenden Aufnahme der Abdeckfolie (34) aufweisen.

## Claims

1. A loading dock seal for a loading dock doorway of a building with one respective elastic resilient carrier body (14) being mountable to the respective right and left sides of the loading dock doorway, flexible side aprons (22) and/or top aprons (26) being mountable to said carrier body (14),
**characterized in**
**that** the carrier body (14) is made from a composite material formed of fiber reinforced rubber and/or plastics, the composite material having a sandwich structure and at least two fabric layers (28) alternating with at least one rubber (30) and/or plastics layer.

2. The loading dock seal in accordance with claim 1,
**characterized in**
**that** the fiber is formed of glass, polyamide, polyester, metal or steel.

3. The loading dock seal in accordance with any of the afore mentioned claims,
**characterized in**
**that** the composite material is formed of at least one fabric layer (28) that is woven or knit from fibers and of at least one rubber (30) and/or plastics layer that is mounted to said fabric layer (28) or connected to said fabric layer (28).

4. The loading dock seal in accordance with claim 3,
**characterized in**
**that** the two outer layers of the composite material are formed of the same material.

5. The loading dock seal in accordance with any of the claims 3 or 4,
**characterized in**
**that** the fabric layer (28) is formed of fibers of different materials.

6. The loading dock seal in accordance with claim 5,
**characterized in**
**that** the weft yarns of the fabric layer (28) are polyamide yarns and that the warp yarns of the fabric layer (28) are polyester yarns.

7. The loading dock seal in accordance with any of the claims 3 through 6,
**characterized in**
**that** the fabric layer (28) is selectively reinforced with aramid fibers.

8. The loading dock seal in accordance with any of the afore mentioned claims,
**characterized in**
**that** a cover sheet (34) is disposed on the loading dock seal (10), said cover sheet (34) being attached to the building (18) and/or to the top apron (26) while lying freely on top of the carrier body (14), said carrier bodies (14) comprising at their top side a triangular recess (32) for receiving the cover sheet (34) so as to shape it.

## Revendications

1. Sas d'étanchéité pour tête de quai de chargement d'un bâtiment avec deux organes porteurs (14) élastiques et souples aptes à être montés l'un à droite, l'autre à gauche de la tête de quai de chargement, des jupes latérales (22) et/ou supérieure (26) flexibles étant susceptibles d'être montées sur l'organe porteur (14),
**caractérisé en ce**
**que** l'organe porteur (14) est réalisé en un matériau composite constitué de caoutchouc et/ou de matière plastique renforcés en fibres, ce matériau composite ayant une structure sandwich dans laquelle au moins deux couches de tissu (28) alternent avec au moins une couche de caoutchouc et/ou de matière plastique (30).

2. Sas d'étanchéité selon la revendication 1,
**caractérisé en ce**
**que** la fibre est une fibre de verre, de polyamide, de polyester, de métal ou d'acier.

3. Sas d'étanchéité selon l'une quelconque des revendications précédentes,
**caractérisé en ce**
**que** le matériau composite est formé par au moins une couche de tissu (28) réalisé à partir de fibres tissées ou tricotées et par au moins une couche de caoutchouc (30) et/ou de matière plastique attachée à la couche de tissu (28) ou reliée à celle-ci (28).

4. Sas d'étanchéité selon la revendication 3,
**caractérisé en ce**
**que** les deux couches extérieures du matériau composite sont réalisées dans le même matériau.

5. Sas d'étanchéité selon l'une quelconque des revendications 3 ou 4,
**caractérisé en ce**
**que** la couche de tissu (28) est formée de fibres de divers matériaux.

6. Sas d'étanchéité selon la revendication 5,
**caractérisé en ce**
**que** les fils de trame de la couche de tissu (28) sont en polyamide et que les fils de chaîne de la couche de tissu (28) sont en polyester.

7. Sas d'étanchéité selon l'une quelconque des revendications 3 à 6,
**caractérisé en ce**
**que** la couche de tissu (28) est sélectivement renforcée par des fibres d'aramide.

8. Sas d'étanchéité selon l'une quelconque des revendications précédentes,
**caractérisé en ce**
**qu'**une feuille de recouvrement (34) est disposée sur le sas d'étanchéité (10) et attachée au bâtiment (18) et/ou à la jupe supérieure (26) tandis que la feuille de recouvrement (34) repose librement sur l'organe porteur (14), les organes porteurs (14) comportant sur leur face supérieure un évidement triangulaire (32) destiné à recevoir la feuille de recouvrement (34) et à lui donner une forme.
